# EUROPÄISCHE PATENTSCHRIFT

(11) **EP 1 272 373 B1**
(45) Veröffentlichungstag und Bekanntmachung des Hinweises auf die Patenterteilung: **13.05.2009**
(21) Anmeldenummer: 01931386.5
(22) Anmeldetag: 30.03.2001
(51) Int. Cl.: B60P 3/20

(54) **TRANSPORTABLE KÜHLBOXSYSTEMTECHNIK**
TRANSPORTABLE COOL BOX SYSTEM TECHNOLOGY
SYSTEME D'ENCEINTE REFRIGERANTE TRANSPORTABLE

(30) Priorität: 31.03.2000 DE 20006009 U
(43) Veröffentlichungstag der Anmeldung: 08.01.2003
(73) Patentinhaber: Aqua Society GmbH, 45699 Herten (DE)
(72) Erfinder: Hamm, Hubert, 45659 Recklinghausen (DE); Hoika, Georg, 45894 Gelsenkirchen (DE)
(74) Vertreter: Michalski Hüttermann & Partner Patentanwälte
(86) Internationale Anmeldenummer: PCT/DE2001/001198
(87) Internationale Veröffentlichungsnummer: WO 2001/075381

(56) Entgegenhaltungen:
- WO-A-00/30891
- DE-U- 1 729 071
- DE-U- 1 744 691
- DE-U- 1 835 041
- FR-A- 2 772 691
- GB-A- 2 278 745
- US-A- 3 034 843
- US-A- 5 029 450
- PATENT ABSTRACTS OF JAPAN vol. 014, no. 478 (M-1036), 18. Oktober 1990 (1990-10-18) & JP 02 192568 A (MATSUSHITA REFRIG CO LTD), 30. Juli 1990 (1990-07-30)

## Beschreibung

Um die gesetzlich vorgeschriebenen Kühlketten für Lebensmittel nicht zu unterbrechen, gibt es im Bereich der Transportkühlung eine Vielzahl von technischen Realisationen. Der Transport größerer Mengen per Schiff oder per LKW ist mit großen Containern nahezu perfekt gestaltet.

Ein derartiger Kühltransport ist beispielsweise in FR 2772691 in Form eines speziellen Kühlcontainers beschrieben, der sowohl in einem Zug als auch auf einem LKW transportiert werden kann.

Der Transport der Lebensmittel von den großen Kühlhäusern zur Verkaufsstelle, d.h. zur Fleischerei oder zum Lebensmittelgeschäft geschieht in den meisten Fällen durch eigene Fahrzeuge der Verkäufer. Diese Fahrzeuge sind in der Regel Kastenfahrzeuge, wie z.B. Fiat Tokato, Mercedes Sprinter, Ford Transit, VW usw. Sie werden nicht in den Herstellerwerken, sondern in speziellen Unternehmen zu Kühltransportern umgebaut.

Der Laderaum eines solchen Fahrzeugs muss komplett isoliert werden, so dass er den gesetzlichen Hygienevorschriften entspricht. Je nach Einsatzzweck werden entsprechende Kälteanlagen installiert. Diese können die Tiefkühlung, Normalkühlung und dann, je nach Wunsch, für Stand- oder Stand-und Fahrkühlung ausgelegt werden. Die technischen Einrichtungen sind fest installiert und können in der Regel bei einem Fahrzeugwechsel nicht demontiert und wiederverwendet werden.

Bei mechanischen Schäden im Bereich des Kühlsystems ist die Reparatur sehr zeit- und kostenintensiv. Das Fahrzeug kann während der Reparaturzeit nicht eingesetzt werden.

Die Installation der Kälteanlagen lässt sich nur durch die teilweise Beschädigung oder Veränderung der Karosserie durchführen.

In den meisten Fallen wird nur ein Teil des vorhandenen Ladevolumens benötigt. Das Fahrzeug darf nicht für andere Transportguter außer Lebensmittel eingesetzt werden. Die Entsorgung solcher Fahrzeuge ist sehr aufwendig, da die Komponenten der Kälteanlagen sowie das Material der Isolierungen entfernt werden müssen. Mit solchen Fahrzeugen lässt sich nur schwer ein sinnvolles Logistiksystem aufbauen.

Die erfindungsgemäße Idee ist es, eine Alternativlösung zu geben, die die Nachteile der auf dem Markt befindlichen technischen Systeme und Möglichkeiten vollkommen eliminiert.

So sind z.B. diese Fahrzeuge teilweise 3 Stunden pro Tag im Einsatz. In der restlichen Zeit stehen diese Fahrzeuge, weil sie für keine anderen Zwecke eingesetzt werden können. In vielen Fällen wird das Ladevolumen nur bis zu 50% ausgenutzt, da man auf herkömmliche Fahrzeuge zurückgreifen möchte. Tatsache ist, dass die teuren Fahrzeuge nur ein Achtel der Tageszeit im Einsatz sind und das Ladevolumen in der vorhandenen Größe nicht immer gebraucht wird.

Die erfindungsgemäße Idee ist es, die Kühlfahrzeuge mehrfach nutzbar zu gestalten. Die Isolierung muss einfach ein- und ausschiebbar sein. Die Lichtmaschine des Fahrzeuges muss soviel Strom erzeugen, wie die Kühlanlage benötigt. Aus diesem Grunde wurde folgendes System erfindungsgemäß entwickelt.

Bei dem erfindungsgemäßen Verfahren zum Erhalt eines geschlossenen Kühl- bzw. Wärmekreislaufs einer mit einem Fahrzeug zu transportierenden elektrisch betriebenen Kühl-oder Warmhaltebox, die ein in sich geschlossenes, fahrbares System ist, weist die Kühl- oder Warmhaltebox ein teleskopierbares und klappbares Rollgestell auf und wird mit dem Rollgestell auf Höhe eines Laderaumbodens des Fahrzeuges angehoben. Die Kühl- oder Warmhaltebox wird über Zwangsschienen auf das Fahrzeug hinaufgezogen und das Rollgestell wird an den Unterboden der Kühl- oder Warmhaltebox angeklappt. Die Kühl- oder Warmhaltebox mit angeklapptem Rollgestell wird auf dem Fahrzeug arretiert. Eine Stromerzeugungsanlage des Fahrzeuges wird an die elektrisch betriebene Kühl- oder Warmhaltebox zur Kühlung bzw. Warmhaltung angeschlossen.

In einem bevorzugten Verfahren wird als Element zur Kühlung oder zur Wärmung des Innenraumes der Kühl- oder Warmhaltebox ein Peltierelement herangezogen.

In einem besonders bevorzugten Verfahren erfolgt für einen Tiefkühlbereich die Kühlung über eine Kältemaschine, die mit einem Wechselrichter 12V/230V betrieben wird.

Vorzugsweise erfolgt in einem Verfahren für einen Tiefkühlbereich die Kühlung mit eutektischen Platten bzw. Rohren.

In einem bevorzugten Verfahren wird ein Reinigen, Befüllen oder Zwischenkühlen der Kühl- oder Warmhaltebox ohne Stillstand des Fahrzeuges durchgeführt.

Die erfindungsgemäße transportable Kühl- oder Warmhaltebox zur Durchführung des Verfahrens mit einem Element zur Kühlung oder zur Wärmung des Innenraumes der Kühl- oder Warmhaltebox, weist elektrische Anschlussmittel, die mit einer Stromerzeugungsanlage eines Fahrzeuges koppelbar sind, um das Element zur Kühlung oder Wärmung des Innenraumes zu bedienen auf, und weist ein am Unterboden der Kühl- oder Warmhaltebox angeordnetes teleskopierbares und an diese anklappbares Rollgestell auf.

Vorzugsweise ist das Element zur Kühlung oder zur Wärmung des Innenraumes der Kühl- oder Warmhaltebox ein Peltierelement. In einer besonders bevorzugten Ausführungsform weist die transportable Kühl- oder Warmhaltebox für die Kühlung in einem Tiefkühlbereich eine Kältemaschine auf, die mit einem Wechselrichter 12V/230V betrieben wird.

In einer bevorzugten Ausführungsform weist die transportable Kühl- oder Warmhaltebox für die Kühlung in einem Tiefkühlbereich eutektische Platten bzw. Rohre auf.

Die Erfindung betrifft ferner ein Fahrzeug mit einer transportablen Kühl- oder Warmhaltebox, wobei die Kühl- oder Warmhaltebox mit einem teleskopierbaren Rollgestell auf Höhe eines Laderaumbodens des Fahrzeuges angehoben werden und über Zwangsschienen auf das Fahrzeug mit einer Stromerzeugungsanlage hinaufgezogen werden kann. Die Kühl-oder Warmhaltebox ist wie vorstehend beschrieben aus- und weitergebildet.

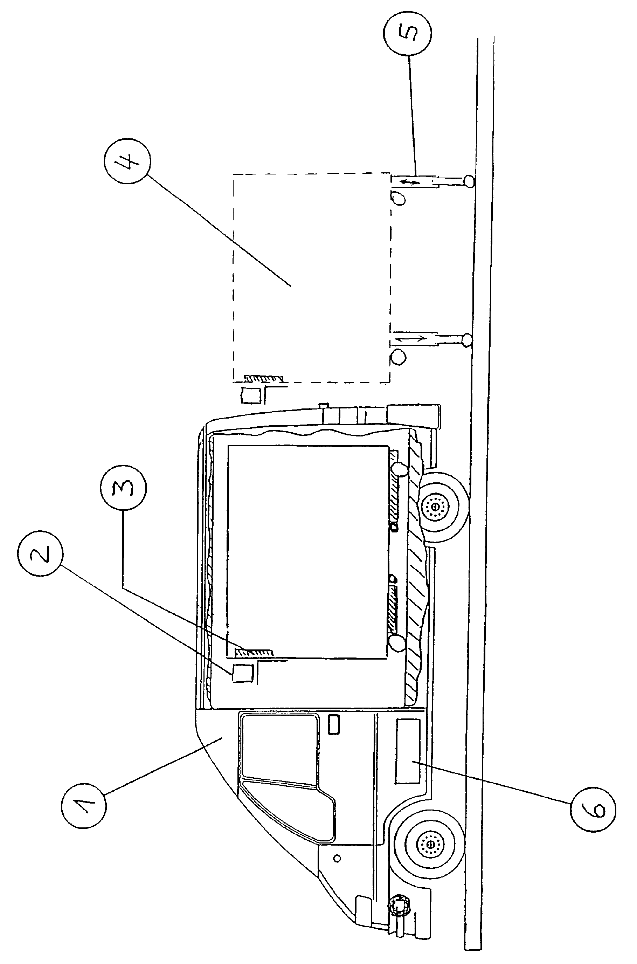

In der beiliegenden Zeichnung ist dargestellt:
mit 1) ein Fahrzeug
mit 2) die Kältemaschine
mit 3) der Verdampfer
mit 4) die eigentliche Kühl- oder Warmhaltebox
mit 5) das teleskopierbare Rollgestell (ähnlich dem Krankenwagensystem)
mit 6) der Wechselrichter.

Die Kühl- oder Warmhaltebox selber ist ein stabiler Rahmen, der nach Bedarf so ausgebildet ist, dass er für den Betreiber des Fahrzeuges und/oder der Kühlbox sinnvoll erscheint.

So können z.B. Coolboxen gereinigt werden, gefüllt werden, zwischengekühlt werden, ohne dass das Fahrzeug ebenfalls stillsteht, sondern es kann anderweitig für Transportaufgaben genutzt werden.

Selbstverständlich ist die Erfindung nicht auf die vorstehend ausgebildeten, zeichnerisch dargestellten und beschriebenen Ausbildungsformen beschränkt, sondern es sind zahlreiche Änderungen möglich, ohne jedoch von dem Grundgedanken abzuweichen, dass die Kühlbox in sich ein geschlossenes, fahrbares System ist, das über Zwangsschienen auf kleinere oder größere Fahrzeuge hinaufgezogen werden kann, dort arretiert wird und von der Stromerzeugungsanlage des Fahrzeuges zur Kühlung bzw. Warmhaltung des Kühl- oder Warmhalteraumes bedient wird.

## Patentansprüche

1. Verfahren zum Erhalt eines geschlossenen Kühl- bzw. Wärmekreislaufs einer mit einem Fahrzeug zu transportierenden elektrisch betriebenen Kühl- oder Warmhaltebox (4), die ein in sich geschlossenes, fahrbares System ist, mit folgenden Schritten:
die ein teleskopierbares und klappbares Rollgestell (5) aufweisende Kühl- oder Warmhaltebox (4) wird mit dem Rollgestell (5) auf Höhe eines Laderaumbodens des Fahrzeuges (1) angehoben,
die Kühl- oder Warmhaltebox (4) wird über Zwangsschienen auf das Fahrzeug (1) hinaufgezogen und das Rollgestell (5) wird an den Unterboden der Kühl- oder Warmhaltebox (4) angeklappt,
die Kühl- oder Warmhaltebox (4) mit angeklapptem Rollgestell (5) wird auf dem Fahrzeug arretiert, und
eine Stromerzeugungsanlage des Fahrzeuges wird an die elektrisch betriebene Kühl- oder Warmhaltebox (4) zur Kühlung bzw. Warmhaltung angeschlossen.

2. Verfahren nach Anspruch 1, bei dem als Element zur Kühlung oder zur Wärmung des Innenraumes der Kühl- oder Warmhaltebox (4) ein Peltierelement herangezogen wird.

3. Verfahren nach Anspruch 1 oder 2, bei dem für einen Tiefkühlbereich die Kühlung über eine Kältemaschine erfolgt, die mit einem Wechselrichter 12V/230V betrieben wird.

4. Verfahren nach Anspruch 1 oder 2, bei dem für einen Tiefkühlbereich die Kühlung mit eutektischen Platten bzw. Rohren erfolgt.

5. Verfahren nach einem der Ansprüche 1 bis 4, brei dem ein Reinigen, Befüllen oder Zwischenkühlen der Kühl- oder Warmhaltebox (4) ohne Stillstand des Fahrzeuges (1) durchgeführt wird.

6. Transportable Kühl- oder Warmhaltebox zur Durchführung des Verfahrens nach einem der Ansprüche 1 bis 5, umfassend
- ein Element zur Kühlung oder zur Wärmung des Innenraumes der Kühl- oder Warmhaltebox (4),
- elektrische Anschlussmittel, die mit einer Stromerzeugungsanlage eines Fahrzeuges (1) koppelbar sind, um das Element zur Kühlung oder Wärmung des Innenraumes zu bedienen,
- ein am Unterboden der Kühl- oder Warmhaltebox (4) angeordnetes teleskopierbares und an diesen anklappbares Rollgestell (5).

7. Transportable Kühl- oder Warmhaltebox nach Anspruch 6, bei der das Element zur Kühlung oder zur Wärmung des Innenraumes der Kühl- oder Warmhaltebox (4) ein Peltierelement ist.

8. Transportable Kühl- oder Warmhaltebox nach Anspruch 6 oder 7, die für die Kühlung in einem Tiefkühlbereich eine Kältemaschine (2) aufweist, die mit einem Wechselrichter 12V/230V betrieben wird.

9. Transportable Kühl- oder Warmhaltebox nach Anspruch 6 oder 7, die für die Kühlung in einem Tiefkühlbereich eutektische Platten bzw. Rohre aufweist.

10. Fahrzeug mit einer transportablen Kühl- oder Warmhaltebox (4) nach einem der Ansprüche 6 bis 9.

## Claims

1. Method for obtaining a closed cooling or heating circuit of an electrically operated keep-cool or keep-warm box (4) which is to be transported by a vehicle, this box being a self-contained, mobile system, comprising the following steps:
the keep-cool or keep-warm box (4), which comprises a telescopically extendable and foldable roller stand (5), is raised by the roller stand (5) to the level of a loading compartment floor of the vehicle (1),
the keep-cool or keep-warm box (4) is pulled up onto the vehicle (1) via guide rails, and the roller stand (5) is folded up against the underbody of the keep-cool or keep-warm box (4),
the keep-cool or keep-warm box (4) together with the folded-up roller stand (5) is immobilized on the vehicle, and
a power-generating unit of the vehicle is connected to the electrically operated keep-cool or keep-warm box (4) for cooling or heat-maintaining purposes.

2. Method according to Claim 1, in which the element used for cooling or for heating the interior of the keep-cool or keep-warm box (4) is a Peltier element.

3. Method according to Claim 1 or 2, in which the cooling for a deep-freezing range is performed by a refrigerating machine which is operated with a 12 V/230 V inverter.

4. Method according to Claim 1 or 2, in which the cooling for a deep-freezing range is performed using eutectic plates or tubes.

5. Method according to one of Claims 1 to 4, in which cleaning, filling or intermediate cooling of the keep-cool or keep-warm box (4) is carried out without the vehicle (1) being at a standstill.

6. Transportable keep-cool or keep-warm box for carrying out the method according to one of Claims 1 to 5, comprising
- an element for cooling or for heating the interior of the keep-cool or keep-warm box (4),
- electrical connection means which can be coupled to a power-generating unit of a vehicle (1) in order to operate the element for cooling or heating the interior,
- a telescopically extendable roller stand (5) which is arranged on and can be folded up against the underbody of the keep-cool or keep-warm box (4).

7. Transportable keep-cool or keep-warm box according to Claim 6, in which the element for cooling or for heating the interior of the keep-cool or keep-warm box (4) is a Peltier element.

8. Transportable keep-cool or keep-warm box according to Claim 6 or 7, which for cooling in a deep-freezing range comprises a refrigerating machine (2) which is operated with a 12 V/230 V inverter.

9. Transportable keep-cool or keep-warm box according to Claim 6 or 7, which for cooling in a deep-freezing range comprises eutectic plates or tubes.

10. Vehicle comprising a transportable keep-cool or keep-warm box (4) according to one of Claims 6 to 9.

## Revendications

1. Procédé pour obtenir un circuit de refroidissement ou de chauffage fermé d'une enceinte de refroidissement ou de maintien au chaud (4) fonctionnant électriquement, à transporter avec un véhicule, qui est un système fermé en soi, déplaçable, comprenant les étapes suivantes :
l'enceinte de refroidissement ou de maintien au chaud (4) présentant un châssis roulant (5) télescopable et rabattable est soulevée avec le châssis roulant (5) à la hauteur d'un sol de coffre de chargement du véhicule (1),
l'enceinte de refroidissement ou de maintien au chaud (4) est tirée par le biais de rails directeurs sur le véhicule (1) et le châssis roulant (5) est rabattu contre le dessous de l'enceinte de refroidissement ou de maintien au chaud (4),
l'enceinte de refroidissement ou de maintien au chaud (4), avec le châssis roulant (5) rabattu, est bloquée sur le véhicule, et
une installation de génération de courant du véhicule est raccordée à l'enceinte de refroidissement ou de maintien au chaud (4) fonctionnant électriquement pour assurer le refroidissement ou le maintien au chaud.

2. Procédé selon la revendication 1, dans lequel on utilise comme élément de refroidissement ou de chauffage de l'espace interne de l'enceinte de refroidissement ou de maintien au chaud (4) un élément de Peltier.

3. Procédé selon la revendication 1 ou 2, dans lequel, pour une plage de congélation, le refroidissement a lieu par le biais d'une machine de réfrigération qui fonctionne avec un onduleur à 12V/230V.

4. Procédé selon la revendication 1 ou 2, dans lequel, pour une plage de congélation, le refroidissement a lieu avec des plaques ou des tubes eutectiques.

5. Procédé selon l'une quelconque des revendications 1 à 4, dans lequel on effectue un nettoyage, un remplissage ou un refroidissement intermédiaire de l'enceinte de refroidissement ou de maintien au chaud (4) sans arrêt du véhicule (1).

6. Enceinte de refroidissement ou de maintien au chaud transportable pour mettre en oeuvre le procédé selon l'une quelconque des revendications 1 à 5, comprenant :
- un élément pour refroidir ou chauffer l'espace interne de l'enceinte de refroidissement ou de maintien au chaud (4),
- des moyens de raccordement électriques qui peuvent être accouplés à une installation de génération de courant d'un véhicule (1), afin de faire fonctionner l'élément de refroidissement ou de chauffage de l'espace interne,
- un châssis roulant (5) télescopable disposé sur le dessous de l'enceinte de refroidissement ou de maintien au chaud (4) et rabattable contre celle-ci.

7. Enceinte de refroidissement ou de maintien au chaud transportable selon la revendication 6, dans laquelle l'élément de refroidissement ou de chauffage de l'espace interne de l'enceinte de refroidissement ou de maintien au chaud (4) est un élément de Peltier.

8. Enceinte de refroidissement ou de maintien au chaud transportable selon la revendication 6 ou 7, qui présente, pour le refroidissement dans une plage de congélation, une machine de réfrigération (2) qui fonctionne avec un onduleur à 12V/230V.

9. Enceinte de refroidissement ou de maintien au chaud transportable selon la revendication 6 ou 7, qui présente, pour le refroidissement dans une plage de congélation, des plaques ou des tubes eutectiques.

10. Véhicule comprenant une enceinte de refroidissement ou de maintien au chaud (4) selon l'une quelconque des revendications 6 à 9.
